# EUROPEAN PATENT APPLICATION

(11) **EP 2 653 718 A1**
(43) Date of publication of application: **23.10.2013**
(21) Application number: 12164706.9
(22) Date of filing: 19.04.2012
(51) Int. Cl.: F03D 1/06

(54) **A wind turbine blade having reduced drag**

(71) Applicant: LM Wind Power A/S, 6000 Kolding (DK)
(72) Inventor: Anwar, Mohammed Mehraj, 560097 Bangalore (IN)
(74) Representative: Hussey, Paul Anthony

(57) **Abstract**

A wind turbine blade is described having a rotating body provided spaced from the trailing edge of the blade. The rotating body is arranged to absorb turbulent energy from airflow over a blade profile, and/or to disrupt the airflow at the trailing edge of the blade, to reduce the drag of the blade at the trailing edge. The rotating body is preferably passively rotated by the airflow, and may comprise projections and/or undulations in the surface of the body. The system is particularly effective for wind turbine blades having a blunt trailing edge, but can also be used on wind turbine blades having a tapered trailing edge.

## Description

### Field of the Invention

The present invention relates to a wind turbine blade having reduced drag, in particular a wind turbine blade having a device at the blade trailing edge to reduce blade drag.

### Background of the Invention

As power demands increase, there is a constant drive to increase the power generation level from renewable energy sources, e.g. wind turbines. As the power level of a wind turbine is dependent on the area swept by the rotating blades, this translates to a desire to develop longer wind turbine blades. However, as blades increase in dimensions, various structural challenges arise due to the complexity and relative fragility of large-scale fibre-composite-based structures.

Airfoil profiles can sometimes be configured to comprise a blunt trailing edge. The use of a blunt trailing edge profile provides improved lift performance compared to similar sharp trailing edge profiles, while also providing a construction which can satisfy structural requirements for relatively large dimension wind turbine blades.

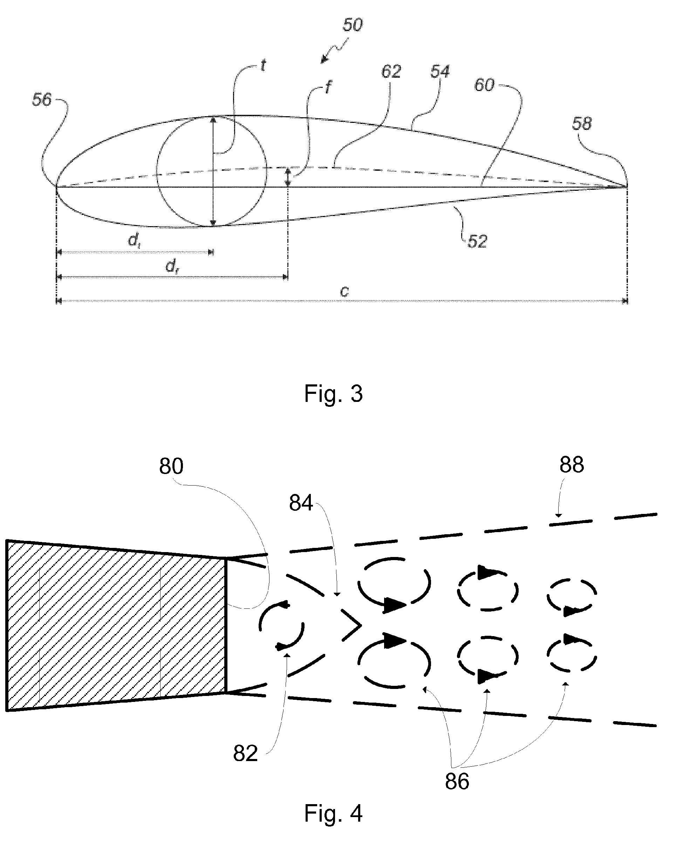

However, the use of a blunt trailing edge introduces base drag and possible vortex shedding. With reference to Fig. 4, the trailing edge portion of a section of an airfoil profile is indicated at 80. As airflow passes beyond the blunt trailing edge 80, this results in the formation of a standing vortex 82 adjacent the trailing edge 80 within the dividing streamlines 84 extending from the sides of the blunt trailing edge 80, as well as the formation of moving vortices 86 in the wake of the profile, within the wake boundaries 88. The poor drag performance of blunt trailing edge profiles has prevented the widespread usage of such profiles for wind turbine blade applications, where the high levels of introduced drag are a concern.

It is known to provide splitter plates or cavities at the trailing edge of blunt trailing edge profiles in an effort to reduce the drag of such profiles by the reduction of the vortex shedding effect at the trailing edge, for example "DRAG REDUCTION OF BLUNT TRAILING-EDGE AIRFOILS"; Jonathon P. Baker and C.P. van Dam; BBAA VI International Colloquium on Bluff Bodies Aerodynamics & Applications; Milano, Italy; July 20-24 2008. However, while such devices can provide a reduction of the order of 50% of drag in the operating range of the profile (e.g. 4-5 degrees), they do not deal with the elimination of the standing vortex at the trailing edge and vortex shedding continues to occur in the wake. In addition, there is a need to provide an improved reduction of drag over a wider range of operation.

There is a similar need to provide a reduction in drag for normal, i.e. sharp trailing edge profiles.

Accordingly, it is an object of the invention to provide a wind turbine blade having reduced drag, in particular a wind turbine blade having at least a portion of a blunt trailing edge profile having reduced drag.

### Summary of the Invention

Accordingly, there is provided a wind turbine blade for a rotor of a wind turbine having a substantially horizontal rotor shaft, the rotor comprising a hub, from which the wind turbine blade extends substantially in a radial direction when mounted to the hub, the wind turbine blade extending in a longitudinal direction parallel to a longitudinal axis and having a tip end and a root end,
the wind turbine blade further comprising a profiled contour including a pressure side and a suction side, as well as a leading edge and a trailing edge with a chord having a chord length extending therebetween, the profiled contour, when being impacted by an incident airflow, generating a lift,
the wind turbine blade further comprising a rotating body provided at the trailing edge of the profiled contour, the rotating body extending in a longitudinal direction adjacent at least a portion of the length of the wind turbine blade between said tip end and said root end, said rotating body operable to prevent the formation of standing vortices at the blade trailing edge to reduce drag of the wind turbine blade.

The use of a rotating body at the blade trailing edge acts to absorb energy in the airflow at the trailing edge, and/or to disrupt the airflow, in order to reduce or dissipate the turbulent energy in the airflow which results in the formation of vortex shedding phenomena at the blade trailing edge. Preferably, the rotating body is passively rotated by the airflow at the blade trailing edge, acting to absorb the available turbulent energy in the airflow to rotate the body, thereby preventing the formation of standing vortices and/or vortices in the wake of the blunt trailing edge blade profile.

Preferably, the rotating body is arranged along an axis of rotation, wherein said axis of rotation extends in a direction parallel to the trailing edge of the profiled contour.

As the rotating device extends adjacent to the blade trailing edge, the vortex reducing effects of the rotating body device can be applied along a portion of the length of the blade.

Preferably, the rotating body is spaced from the trailing edge.

Spacing the rotating body from the trailing edge of the profiled contour provides for ease of manufacturing or installation of the rotating body, as the device is not an intrinsic part of the profiled contour construction.

Preferably, the rotating body is spaced from the trailing edge along the line of the chord of the profiled contour in a direction away from the leading edge of the profiled contour.

As the rotating body device is positioned spaced from the trailing edge in the wake of the profiled contour, the maximum effectiveness in the reduction in turbulent energy in the airflow is provided, and accordingly the maximum reduction in drag-causing phenomena is achieved.

Preferably, said rotating body is adjustable to be offset from the chord line of the profiled contour.

If desired, the positioning of the rotating body device may be adjusted to be offset from the chord line towards the pressure side or the suction side of the profiled contour, in order to tailor the performance of the device for the particular airfoil profile used, e.g. in a substantially flapwise direction. Additionally or alternatively, the positioning of the rotating body device may be adjusted in an edgewise direction, i.e. towards or away from the trailing edge, substantially parallel to the chord line of the wind turbine blade. This adjustment of the device position and geometry may be configured during the initial design phase, and/or the blade may comprise a dynamic adjustment mechanism wherein the positioning of the rotating body may be automatically or remotely controlled during blade operation.

Preferably, the profiled contour comprises a blunt trailing edge.

As blunt trailing edge airfoils have relatively high drag characteristics, particularly when used in the region of the root to the section of maximum chord of the blade, the drag-reducing characteristics of the rotating body device provide a considerable advantage when used in such blades.

Preferably, said blunt trailing edge has a trailing edge height TE, and wherein said rotating body is spaced from said blunt trailing edge such that the distance from said blunt trailing edge to the axis of rotation of said rotating body is between approximately 0.1TE - 1.25TE.

Preferably, said blunt trailing edge has a trailing edge height TE, and said rotating body is arranged such that the distance from the axis of rotation of the rotating body to the most distal point of the rotating body from said axis of rotation is between approximately 0.2TE-0.9TE.

It will be understood that any combination of these ranges may be used which allow the rotating body to freely rotate about the axis of rotation.

The dimensions of the rotating body device, e.g. body diameter, height of projecting elements, etc. can be selected to provide the best performance in reducing blade drag based on the location on the blade. Experimental results have indicated that these ranges provide the most improved performance in reducing drag effects, in particular on a system having a blunt trailing edge, wherein the height of the trailing edge is approximately 10% of the chord length of the profiled contour, having a Reynolds number of 3 million. However, it will be understood that the above ranges are predicted to perform well for other airfoil profiles and their operating conditions, which are used between the root and tip of the wind turbine blade.

It will be understood that different geometries and dimensions of the rotating body may be selected as required, dependent on the level of drag reduction to be performed and on the characteristics of the profiled airfoil contour of the wind turbine blade. For example, the height of TE may be taken to be approximately 10% of the chord length of the profiled contour. This measurement may be used for blades having profiled contours with either blunt or non-blunt trailing edges.

Preferably, said rotating body comprises a plurality of rotating body sections, wherein said plurality of rotating body sections are separately rotatable along the length of the rotating body.

As the rotating body may be provided as several separately rotatable sections, the rotation and associated drag-reducing effect may operate at different rates along the length of the wind turbine blade, dependent on the airflow at different locations along the longitudinal length of the blade.

Preferably, said rotating body scales in dimension from a relatively larger size towards said root end to a relatively smaller size towards said tip end.

It will be understood that the rotating body may taper or scale along the longitudinal length of the blade, corresponding to the adjacent tapering or transitioning of the profiled contour of the blade, from a relatively large and bulky root end towards a relatively narrow and slender tip end. Accordingly, the rotating body may comprise a substantially frustoconical construction.

Preferably, said rotating body is formed from a light weight material, e.g. balsa wood, plastic, plaster of paris, such that the rotating body is passively rotated by the force of the airflow around the profiled contour.

A light weight construction allows for the rotating body to be rotated by the force of the wind at the blade, and provides for simple and reliable operation of the device.

Preferably, said wind turbine blade further comprises a driving mechanism coupled to said rotating body, wherein said driving mechanism is operable to rotate said rotating body about an axis of rotation.

As an alternative, the rotation may be driven by for example a small motor. This may allow for controlled rotation of the device, which can be automatically or remotely adjusted dependent on blade operating conditions.

Preferably, said rotating body comprises a substantially cylindrical body having a surface, wherein said surface is shaped to be rotatable by airflow around the profiled contour.

Preferably, said shaped surface comprises at least one indentation, undulation, dimple, and/or concave/convex depression shaped to be turned by airflow around the profiled contour.

The provision of a shaped surface allows for the surface of the rotating body device to catch the wind around the trailing edge of the blade to rotate the device.

Preferably, said rotating body comprises at least one projecting element arranged to be rotated by airflow around the profiled contour.

The use of projecting elements may more effectively catch the airflow at the blade trailing edge, thereby allowing the rotating body device to rotate more freely and accordingly absorb more of the turbulent energy in the airflow. It will be understood that the at least one projecting arm may comprise a series of discrete projecting arms provided along the longitudinal length of the rotating body, and/or a series of discrete projecting arms provided around the circumference of the rotating body around the rotational axis of the rotating body. It will be further understood that the at least one projecting element may comprise at least one scoop element which may extend along a substantial portion of the longitudinal length of the rotating body, e.g. similar to a Savonius turbine design.

Preferably, said at least one projecting element is shaped to capture airflow such that said at least one projecting arm is operable to rotate said rotating body under action of the airflow around the profiled contour.

Preferably, said at least one projecting element comprises a scoop or a concave profile shaped to capture airflow.

The use of a scoop or substantially concave element allows the rotating body to act similar to a cup anemometer, being rotated by the wind. It will be understood that the open face of the scoop or concave profile will be arranged so that the rotating body will be forced to rotate in one direction around the axis of rotation, preferably such that the rotating body will primarily be rotated by the airflow over the upper suction side of the profiled contour.

Preferably, said rotating body comprises a helical body operable to rotate under action of the airflow around the profiled contour, e.g. similar to a Gorlov helical turbine.

Preferably, said rotating body is arranged to rotate in a clockwise direction when viewed from said root end towards said tip end.

The arrangement of the rotating body to rotate in a clockwise direction, when viewed from the root end of the blade, means that a passively rotating body will primarily be rotated by the action of the airflow from the upper suction side of the profiled contour. As this airflow comprises the majority of turbulent energy responsible for the formation of turbulent vortices in the wake of the blade, accordingly the rotating body device is configured to more effectively reduce the drag-forming characteristics of the airflow by absorbing energy from the upper airflow. However, it will be understood that the body may be arranged to rotate in an anti-clockwise direction, depending on the operating and/or stand-still conditions.

Preferably, the wind turbine blade comprises first and second extension elements projecting from the trailing edge of said blade, the first extension element provided towards the root end of said blade and the second extension element provided towards the tip end of said blade, an axle extending therebetween, wherein said rotating body is mounted on said axle. Additionally, the wind turbine blade may comprise an array of space multiple extension elements for attaching a plurality of the devices between the root and tip.

This system provides a simple mounting mechanism for the rotating body device, such that the system can be easily installed on new wind turbine blades or retrofitted to existing blades, and further provides for relatively easy service operations on the device.

In a further enhancement, said rotating body is operable to be retained in a defined angular position in relation to the blade trailing edge.

In this case, the rotating body may be fixed or locked with regard to the blade trailing edge, wherein the rotating body can be held at a particular position during rotation of the blade, e.g. to reduce drag for particular operating conditions, or to keep the rotating body still during turbine stand-still, e.g. while a blade service operation is being performed.

There is further provided a wind turbine having at least one wind turbine blade as described above.

There is further provided a method of reducing the drag of a wind turbine blade, the method comprising the steps of:
providing a wind turbine blade having a tip end and a root end and a profiled contour including a pressure side and a suction side, as well as a leading edge and a trailing edge with a chord having a chord length extending therebetween, the profiled contour, when being impacted by an incident airflow, generating a lift; and
further providing a rotating body at the trailing edge of the profiled contour, the rotating body extending in a longitudinal direction adjacent at least a portion of the length of the wind turbine blade between said tip end and said root end, said rotating body operable to prevent the formation of standing vortices at the blade trailing edge to reduce drag of the wind turbine blade.

### Description of the Invention

An embodiment of the invention will now be described, by way of example only, with reference to the accompanying drawings, in which:
Fig. 1 shows a wind turbine;
Fig. 2 shows a schematic view of a wind turbine blade;
Fig. 3 shows a schematic view of an airfoil profile of the blade of Fig. 2;
Fig. 4 illustrates the formation of vortices in the wake of a known blunt trailing edge airfoil profile;
Fig. 5 shows a cross-sectional view of an embodiment of wind turbine blade according to the invention;
Fig. 6 illustrates two embodiments of a rotating body for use with the wind turbine blade of Fig. 5; and
Fig. 7 shows an isometric perspective view of a section of the wind turbine blade of Fig. 5.

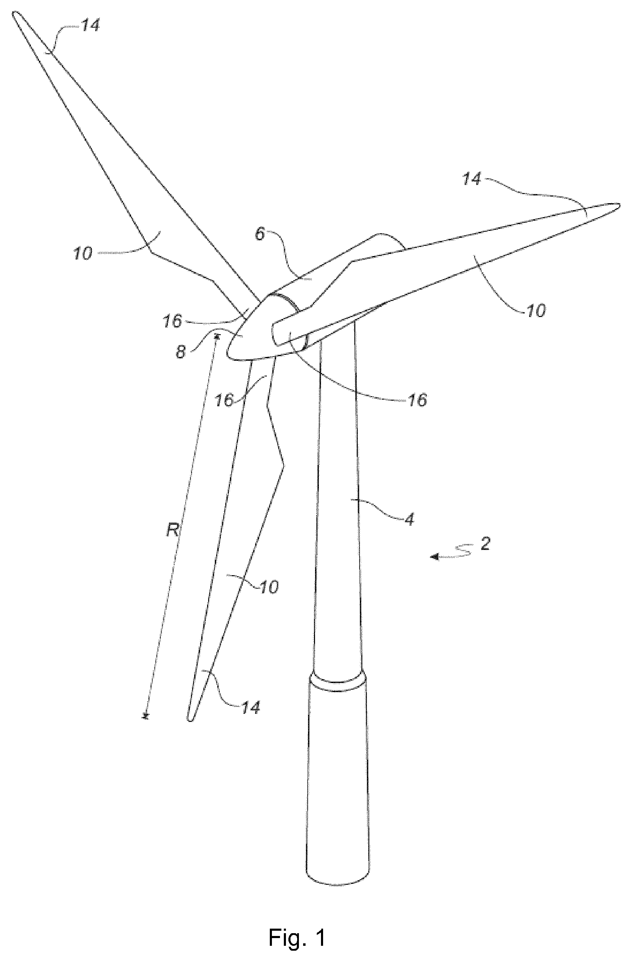

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8. The rotor has a radius denoted R.

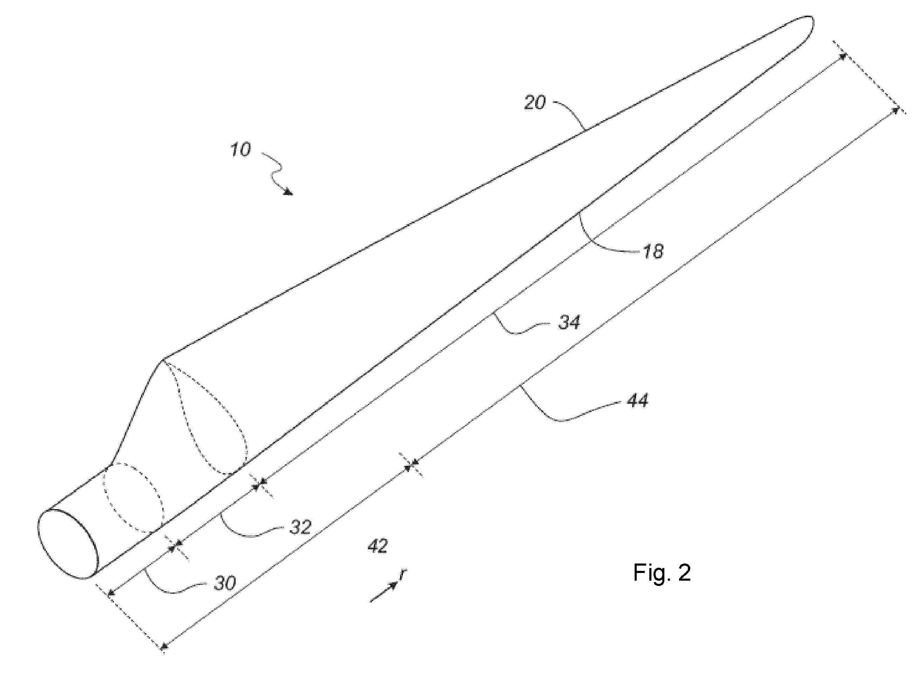

Fig. 2 shows a schematic view of a first embodiment of a wind turbine blade 10 which may be used according to an embodiment of the invention. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 is typically constant along the entire root area 30. The transition region 32 has a transitional profile 42 gradually changing from the circular or elliptical shape of the root region 30 to the airfoil profile 50 of the airfoil region 34. The chord length of the transition region 32 typically increases substantially linearly with increasing distance r from the hub.

The airfoil region 34 has an airfoil profile 50 with a chord extending between the leading edge 18 and the trailing edge 20 of the blade 10. The width of the chord decreases with increasing distance r from the hub.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

Fig. 3 shows a schematic view of an airfoil profile 50 of a typical blade of a wind turbine depicted with the various parameters which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness t of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber f. The asymmetry can also be defined by use of parameters called the upper camber and lower camber, which are defined as the distances from the chord 60 and the suction side 54 and pressure side 52, respectively.

Airfoil profiles are often characterised by the following parameters: the chord length c, the maximum camber f, the position df of the maximum camber f, the maximum airfoil thickness t, which is the largest diameter of the inscribed circles along the median camber line 62, the position dt of the maximum thickness t, and a nose radius (not shown). These parameters are typically defined as ratios to the chord length c.

It will be understood that the invention may be applied in the case of an airfoil profile having a relatively sharp trailing edge 58 as shown in Fig. 3, or in the case of an airfoil profile having a blunt trailing edge.

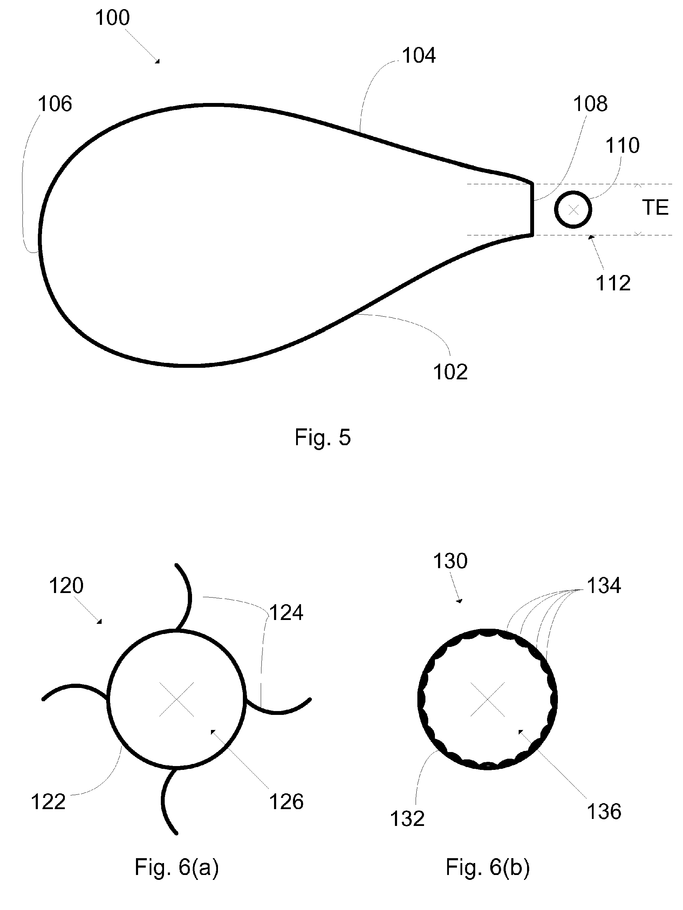

With reference to Fig. 5, a cross-sectional view of a section of a wind turbine blade according to the invention is indicated at 100. As with Fig. 3, the wind turbine blade 100 comprises an airfoil profile having a pressure side 102 and a suction side 104, and a leading edge 106 and a trailing edge 108. The section of the blade 100 shown in Fig. 5 comprises a blunt trailing edge 108.

A substantially cylindrical body 110 is provided at the trailing edge 108, spaced from the trailing edge 108 along the direction of the chordal line of the wind turbine blade profile. The cylindrical body 110 is provided on an axis (indicated at 112) extending along at least a portion of the longitudinal length of the wind turbine blade between the blade root and blade tip, adjacent the trailing edge 108. The body 110 is operable to rotate about the axis 112.

Due to the rotation of the body 110 adjacent the trailing edge 108 of the blade 100, a standing vortex 82 is prevented from being formed in the wake of the blade 100. Furthermore, the location of the body 100 acts to disrupt the airflow in the wake of the trailing edge 108, thereby reducing the effects of vortex shedding. In a preferred embodiment, the rotating body 110 is arranged to be passively rotated by the airflow flowing over the wind turbine blade profile. Accordingly, the rotation of the body 110 by the airflow acts to absorb some of the turbulent kinetic energy from the airflow, thereby reducing the formation of vortices in the wake of the blade 100, along with the associated drag effect.

Additionally or alternatively, it will be understood that the body 110 may be coupled to a driving mechanism (not shown), operable to drive the rotation of the body 110. The speed of rotation of the body 110 may accordingly be controlled to provide the optimum disruption of airflow at the blade trailing edge 108, to reduce the drag effects caused by the formation of vortices in the blade wake.

It will be understood that the rotating body 110 may be provided as a plurality of separate sub-sections (not shown) spaced along the longitudinal length of the blade 100. As different portions of the blade 100 along the blade length may experience different wind speeds over the profile of the blade 100, such sub-sections may be operable to independently rotate at different speeds or rates to provide for effective reduction of the drag effects at different locations along the length of the blade 100.

It will be further understood that the rotating body 110 may scale in dimension according to the dimensions of the adjacent trailing edge 108. As the trailing edge will normally taper in size moving from the root end of a blade to the tip end of a blade, accordingly the dimensions, e.g. the diameter, of the rotating body 110 may also taper in size, such that the rotating body is substantially optimised for effective operation with respect to the trailing edge 108 adjacent the rotating body 110. This may be as a result of different sub-sections of the rotating body having stepped variations in dimensions, or the diameter of a single rotating body may gradually reduce in size along the length of the body.

In a first embodiment of the invention, the rotating body 110 comprises a substantially cylindrical member which extends adjacent the blade trailing edge 108.

In Fig. 6(a), a second embodiment of a rotating body is indicated at 120, wherein the rotating body comprises a cylindrical member 122 having a plurality of projecting elements or arms 124 provided on the member 122, the member arranged to rotate about central axis 126. The projecting elements or arms 124 are arranged to capture the airflow at the trailing edge 108 to rotate the body 120. In Fig. 6(a), the projecting elements or arms 124 comprise concavely-shaped arms oriented to face in the same direction around the rotational path of the body 120. Accordingly, the arms act to scoop the airflow to rotate the body 120 around axis 126 under action of the airflow about the body 120, similar to a cup anemometer.

It will be understood that any suitable arrangement or number of projecting elements or arms may be used. Furthermore, it will be understood that the projecting elements or arms may be provided as an array of discrete elements along the length of the rotating body, or as a plurality of vanes or baffles arranged on the rotating body to catch the oncoming airflow. For example, the rotating body may comprise a construction similar to a Savonius turbine design provided on the central axis of the body.

In Fig. 6(b), a third embodiment of a rotating body is indicated at 130, wherein the rotating body comprises a cylindrical member 132 having a plurality of undulations or dimples 134 defined on the surface of the member 132, the member arranged to rotate about central axis 136. In this embodiment, the body 130 is rotated by the action of the oncoming airflow on the dimples 134, similar to the rotation of a golf ball in flight.

It will be understood that any suitable surface profile may be used for the rotating body, the surface profile operable to rotate the body under action of the airflow at the blade trailing edge.

A further embodiment of a rotating body (not shown) may comprise a helical construction operable to rotate under action of the wind, e.g. similar to a Gorlov helical turbine.

It has been found that the most effective operation of the rotating body 110,120,130 is provided when the body is spaced from the trailing edge of the blade. In particular, when the rotating body is located adjacent a trailing edge having a trailing edge height TE between the suction side and the pressure side of the airfoil profile at the trailing edge, preferably the rotating body 110,120,130 is located such that the distance between the surface of the blunt trailing edge to the axis of rotation 112,126,136 of the rotating body is between approximately 0.1-1.25 TE.

Additionally or alternatively, the rotating body 110,120,130 is arranged such that the distance from the axis of rotation 112,126,136 of the rotating body to the most distal point of the rotating body from said axis of rotation is between approximately 0.2TE-0.9TE.

It will be understood that any combination of these ranges may be used which allow the rotating body 110,120,130 to freely rotate about the axis of rotation.

In the case of a rotating body 110,120,130 provided adjacent a relatively sharp trailing edge (e.g. as seen in the profiled contour of Fig. 3), the above rules may apply when taking the height of TE as approximately 10% of the chord length of the profiled contour.

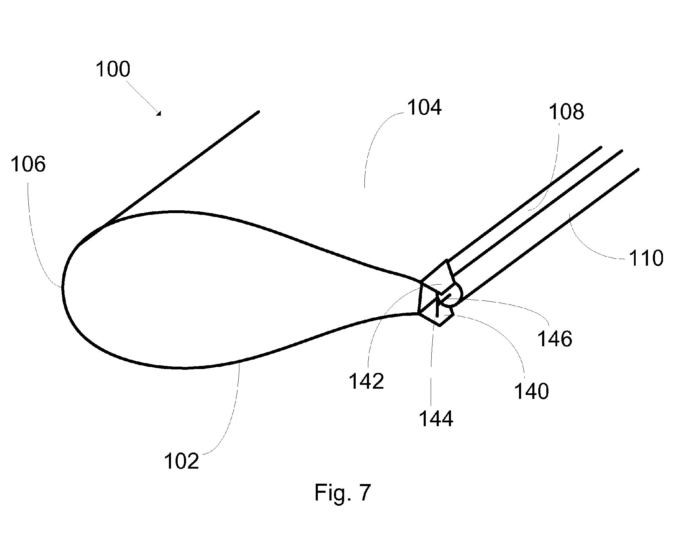

With reference to Fig. 7, an isometric perspective is shown of a portion of the blade 100 of Fig. 5, illustrating a possible mounting mechanism for a rotating body according to the invention. In Fig. 7, first and second extension elements 140,142 project from the respective pressure and suction sides 102,104 of the blunt trailing edge 108. A first bar 144 extends between said first and second extension elements 140,142. A corresponding set of extension elements and a second inter-extending bar (not shown) are provided at a further location along the length of the blade 100. An axle 146 is mounted between said first and second bars 144, said axle extending along the length of the blade 100 adjacent the blunt trailing edge 108. The rotating body 110 is mounted on said axle 146, the axle extending through the axis of rotation 112 of the body 110, as seen in Fig. 5.

It will be understood that the first and second extension elements 140,142 may be formed integrally with the body of the wind turbine blade 100, or may be retrofitted to an existing blade body. Such a system may allow for ease of maintenance and repair of the rotating body device 110,120,130. It will be understood that any other suitable mounting system may be used to locate the rotating body adjacent the trailing edge of the blade 100.

Preferably, the rotating body 110,120,130 is located such that the axis of rotation of the device is in line with the chord line of the blade profile, but it will be understood that the rotating body may alternately be offset from the chord line. In a further enhancement of the invention, the rotating body 110,120,130 may be adjustable in position relative to the chord line of the blade, e.g. the rotating body may be deployed such that the rotating body is located primarily towards the pressure side or the suction side of the blade profile.

In a further enhancement, an axle of a mounting mechanism for the rotating body may be controllably moveable relative to the blade trailing edge during operation of the wind turbine, such that the location of the axis of rotation can be moved. In such a system, the rotating body can be deployed at different positions in the wake of the blade. It will be understood that the axle may be moved in a flapwise and/or an edgewise direction, relative to the wind turbine blade. Such adjustable deployment of the rotating body may be controlled dependent on the operating conditions in general at the wind turbine, and/or based on the operating conditions at different locations along the length of the wind turbine blade.

In a further enhancement of the invention, the rotating body 110,120,130 may be lockable in a defined angular position around the axis of rotation. Accordingly, the rotating body can be held at a particular position during rotation of the blade, e.g. to reduce drag for particular operating conditions, or to keep the rotating body still during turbine stand-still, e.g. while a blade service operation is being performed.

Preferably, the rotating body is formed from a light weight material, e.g. balsa wood, a plastics material, plaster of paris, etc., such that the rotating body is passively rotated by the force of the airflow around the profiled contour.

It will be understood that any of the features of the above described embodiments are not restrictive, and that the features of any particular embodiments may be combined with any of the other embodiments to satisfy the objectives of the invention.

The herein described embodiments present a wind turbine blade having a device to reduce the drag of the wind turbine blade. The device is arranged to be rotated at the trailing edge of the blade, and provides for a reduction in the formation of vortices in the blade wake, which results in a reduction in trailing edge drag. The device provides particular advantages when combined with a blunt trailing edge blade profile.

The invention is not limited to the embodiment described herein, and may be modified or adapted without departing from the scope of the present invention.

## Claims

1. A wind turbine blade for a rotor of a wind turbine having a substantially horizontal rotor shaft, the rotor comprising a hub, from which the wind turbine blade extends substantially in a radial direction when mounted to the hub, the wind turbine blade extending in a longitudinal direction parallel to a longitudinal axis and having a tip end and a root end,
the wind turbine blade further comprising a profiled contour including a pressure side and a suction side, as well as a leading edge and a trailing edge with a chord having a chord length extending therebetween, the profiled contour, when being impacted by an incident airflow, generating a lift,
the wind turbine blade further comprising a rotating body provided at the trailing edge of the profiled contour, the rotating body extending in a longitudinal direction adjacent at least a portion of the length of the wind turbine blade between said tip end and said root end, said rotating body operable to prevent the formation of standing vortices at the blade trailing edge to reduce drag of the wind turbine blade.

2. The blade of claim 1, wherein the rotating body is spaced from said trailing edge, the rotating body is arranged along an axis of rotation, wherein said axis of rotation extends in a direction parallel to the trailing edge of the profiled contour.

3. The blade of claim 1 or claim 2, wherein the profiled contour comprises a blunt trailing edge.

4. The blade of claim 3, wherein said blunt trailing edge has a trailing edge height TE, and wherein said rotating body is spaced from said blunt trailing edge such that the distance from said blunt trailing edge to the axis of rotation of said rotating body is between approximately 0.1TE - 1.25TE.

5. The blade of claim 3 or claim 4, wherein said blunt trailing edge has a trailing edge height TE, and said rotating body is arranged such that the distance from the axis of rotation of the rotating body to the most distal point of the rotating body from said axis of rotation is between approximately 0.2TE-0.9TE.

6. The blade of any preceding claim, wherein said rotating body comprises a plurality of rotating body sections, wherein said plurality of rotating body sections are separately rotatable along the length of the rotating body.

7. The blade of any preceding claim, wherein said rotating body comprises a substantially cylindrical body having a surface, wherein said surface is shaped to be rotatable by airflow around the profiled contour.

8. The blade of claim 7, wherein said shaped surface comprises at least one indentation, undulation, dimple, and/or concave depression shaped to be turned by airflow around the profiled contour.

9. The blade of any one of claims 1-6, wherein said rotating body comprises a helical body operable to rotate under action of the airflow around the profiled contour.

10. The blade of any preceding claim, wherein said rotating body comprises at least one projecting element arranged to be rotated by airflow around the profiled contour.

11. The blade of any preceding claim, said wind turbine blade further comprises a driving mechanism coupled to said rotating body, wherein said driving mechanism is operable to rotate said rotating body about an axis of rotation.

12. The blade of any preceding claim, wherein the wind turbine blade comprises first and second extension elements projecting from the trailing edge of said blade, the first extension element provided towards the root end of said blade and the second extension element provided towards the tip end of said blade, an axle extending therebetween, wherein said rotating body is mounted on said axle.

13. The blade of any preceding claim, wherein said rotating body is operable to be retained in a defined angular position in relation to the blade trailing edge.

14. A wind turbine comprising at least one wind turbine blade as claimed in any one of claims 1-13.

15. A method of reducing the drag of a wind turbine blade, the method comprising the steps of:
providing a wind turbine blade having a tip end and a root end and a profiled contour including a pressure side and a suction side, as well as a leading edge and a trailing edge with a chord having a chord length extending therebetween, the profiled contour, when being impacted by an incident airflow, generating a lift; and
further providing a rotating body at the trailing edge of the profiled contour, the rotating body extending in a longitudinal direction adjacent at least a portion of the length of the wind turbine blade between said tip end and said root end, said rotating body operable to prevent the formation of standing vortices at the blade trailing edge to reduce drag of the wind turbine blade.
